# FASCICULE DE BREVET EUROPEEN

(11) **EP 1 522 218 B1**
(45) Date de publication et mention de la délivrance du brevet: **12.08.2015**
(21) Numéro de dépôt: 04300653.5
(22) Date de dépôt: 05.10.2004
(51) Int. Cl.: A01M 7/00

(54) **Dispositif de sécurité perfectionné pour une rampe de pulvérisation**
Sicherheitsvorrichtung für ein Spritzgestängerohr
Safety device for a spray boom

(30) Priorité: 09.10.2003 FR 0311805
(43) Date de publication de la demande: 13.04.2005
(73) Titulaire: KUHN S.A., 67700 Saverne (FR)
(72) Inventeur: Lor, Sébastien, 77720, MORMANT (FR); Renault, Stéphane, 59116, HOUPLINES (FR)
(74) Mandataire: Esch, Esther Evelyne

(56) Documents cités:
- DE-A- 4 026 032
- FR-A- 1 024 295
- FR-A- 2 673 355
- US-A- 2 548 209
- US-A1- 2002 109 016
- US-B1- 6 293 475

## Description

La présente invention se rapporte au domaine technique général du machinisme agricole. Elle concerne plus particulièrement une rampe de pulvérisation comportant :
- un premier tronçon lié de manière pivotante à un deuxième tronçon au moyen d'une articulation, et
- un dispositif de sécurité destiné à maintenir le premier tronçon dans le prolongement du deuxième tronçon, et destiné à permettre audit premier tronçon de pivoter par rapport audit deuxième tronçon en cas de choc avec un obstacle, ledit dispositif de sécurité comporte à son tour un accumulateur d'énergie lié d'une part audit premier tronçon et d'autre part audit deuxième tronçon.

Les documents FR 1 024 295 et US 2548209 décrivent une rampe de pulvérisation comportant notamment un tronçon central et un tronçon d'extrémité. En position de travail normal, le tronçon d'extrémité est disposé dans le prolongement du tronçon central. La rampe de pulvérisation s'étend alors transversalement à une direction d'avance et de manière sensiblement horizontale. La rampe peut ainsi épandre un produit de traitement sur une grande largeur de travail.

Le tronçon d'extrémité est lié de manière pivotante au tronçon central au moyen d'une articulation. Le tronçon d'extrémité peut ainsi notamment pivoter, vers l'avant ou vers l'arrière dans un plan horizontal, par rapport au tronçon central. Cette articulation permet avantageusement au tronçon d'extrémité de s'effacer en cas de choc avec un obstacle. On réduit ainsi les risques de détérioration de la rampe. Une fois l'obstacle passé, le tronçon d'extrémité est ramené dans sa position initiale à l'aide de deux ressorts de traction. A cet effet, les ressorts de traction sont liés d'une part au tronçon d'extrémité et d'autre part au tronçon central.

Une telle conception présente cependant des inconvénients. En effet lors du travail, la rampe subie des secousses dues notamment aux bosses présentes sur le sol. Pour conserver le tronçon d'extrémité dans le prolongement du tronçon central, les ressorts de traction doivent donc exercer une force initiale de maintien relativement importante. Lors d'un contact avec un obstacle, le pivotement du tronçon d'extrémité par rapport au tronçon central a pour effet d'allonger les ressorts de traction. La force de rappel ainsi créée s'ajoute à la force de maintien initiale. L'articulation reliant le premier tronçon et le deuxième tronçon est alors fortement sollicitée. Pour que ces sollicitations ne nuisent pas à terme au bon fonctionnement de la rampe, il est nécessaire de renforcer cette articulation d'où une augmentation néfaste de la masse de l'ensemble. En outre une fois l'obstacle passé, cette configuration des ressorts de traction provoque un retour très brusque du tronçon d'extrémité dans sa position initiale, ce qui sollicite inutilement ladite rampe.

Le but de la présente invention consiste à remédier à ces inconvénients de l'état de la technique. A cet effet, la rampe de pulvérisation de la présente invention est caractérisée en ce que le déplacement du point d'accrochage dudit accumulateur d'énergie par rapport audit premier tronçon est réalisé au moyen d'un galet roulant sur une came et que dans une des positions, le couple exercé par ledit accumulateur d'énergie sur ledit premier tronçon par rapport audit axe de pivotement devient nul.

Ainsi d'une manière particulièrement avantageuse, lorsque ledit premier tronçon et ledit deuxième tronçon sont alignés, ledit point d'accrochage dudit accumulateur d'énergie occupe une première position par rapport audit premier tronçon. Cette première position dudit point d'accrochage est déterminée de manière à ce que ledit accumulateur d'énergie exerce un certain couple de maintien sur ledit premier tronçon par rapport à ladite articulation dans le but de conserver l'alignement. Puis lorsque l'on atteint un certain angle de pivotement entre ledit premier tronçon et ledit deuxième tronçon suite au contact d'un obstacle, ledit point d'accrochage dudit accumulateur d'énergie occupe une deuxième position par rapport audit premier tronçon. Cette deuxième position dudit point d'accrochage est avantageusement disposée sur l'axe de pivotement entre ledit premier tronçon et ledit deuxième tronçon. A partir de ce moment, l'effort exercé par ledit accumulateur d'énergie sur ledit premier tronçon devient constant. De plus, le couple exercé par ledit accumulateur d'énergie sur ledit premier tronçon par rapport audit axe de pivotement devient alors nul. On limite de la sorte les efforts sur ladite articulation et on adoucit le retour dudit premier tronçon dans sa position initiale.

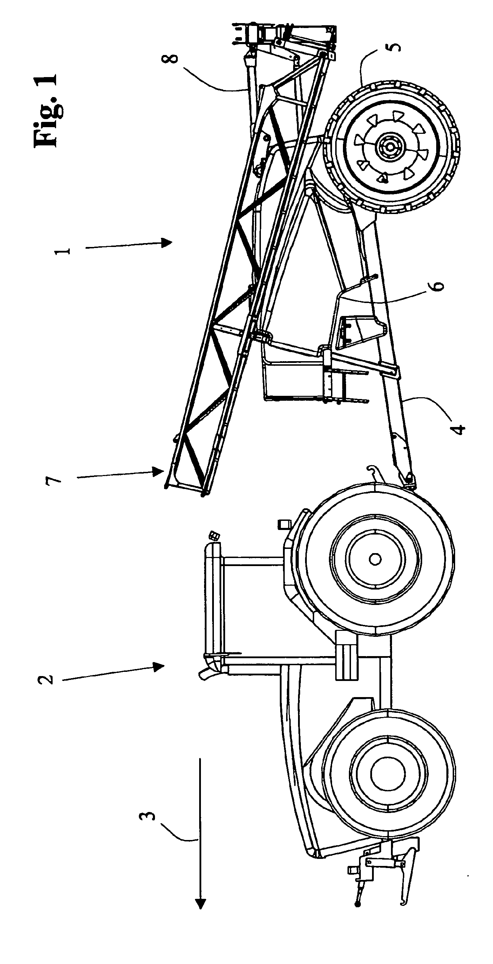

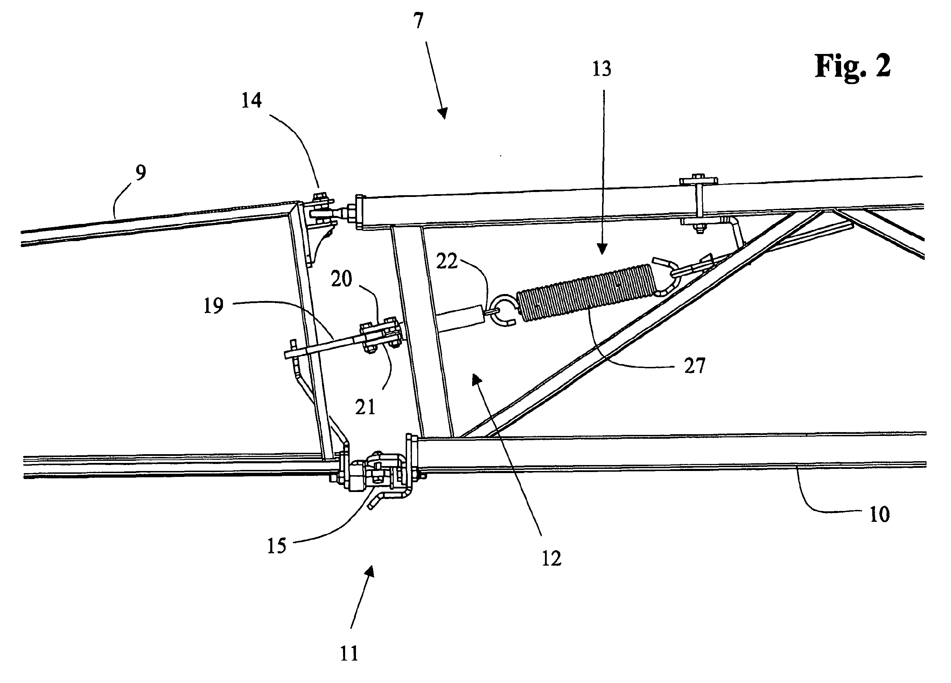

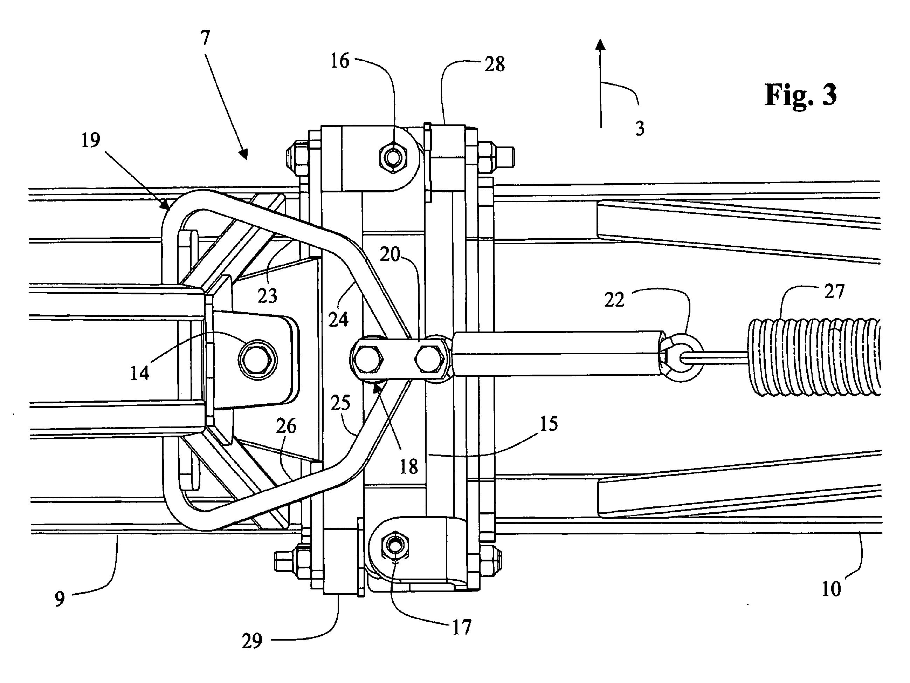

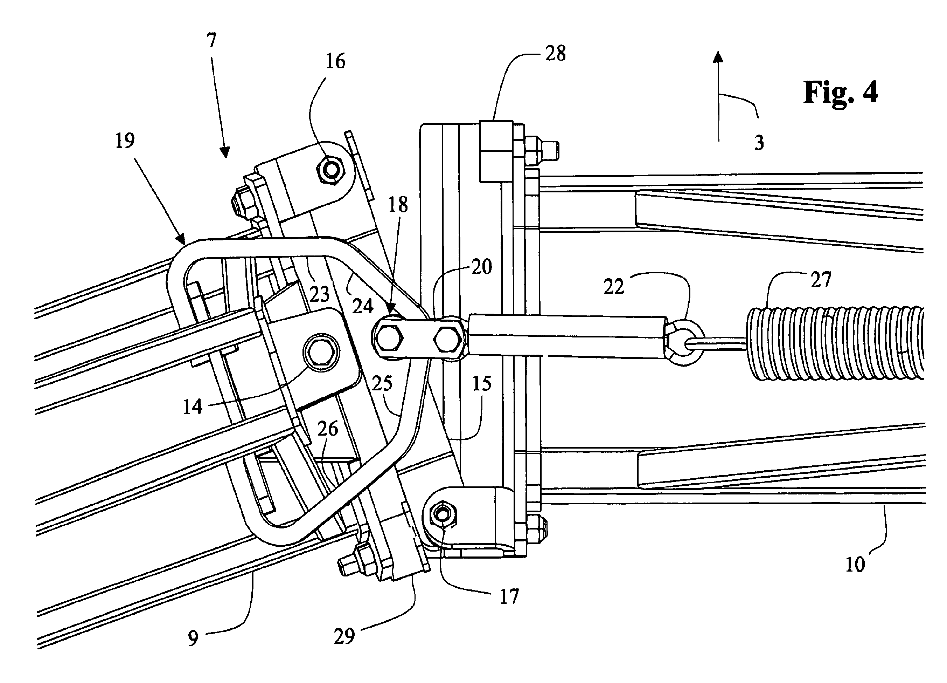

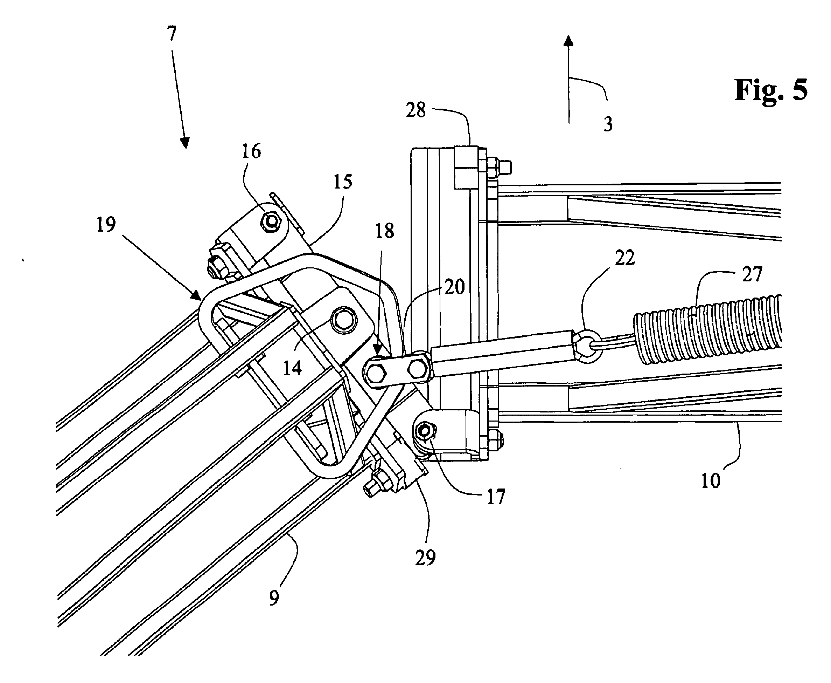

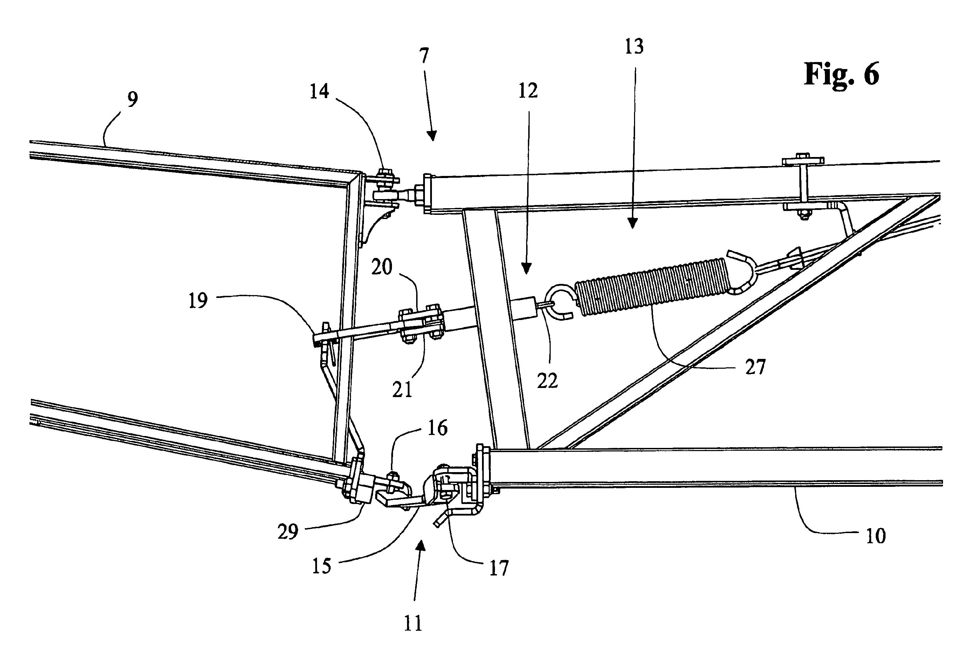

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- **la** **figure 1** représente, vu de coté, un pulvérisateur agricole comportant une rampe conforme à la présente invention,
- **la** **figure 2** représente, vu de derrière, un agrandissement de ladite rampe en position normale de travail,
- **la** **figure 3** représente, vu de dessus, l'agrandissement de la figure 2,
- **la** **figure 4** représente, vu de dessus, un agrandissement de la rampe lorsque le premier tronçon est légèrement pivoté vers l'arrière,
- **la** **figure 5** représente, vu de dessus, un agrandissement de la rampe lorsque le premier tronçon est plus fortement pivoté vers l'arrière,
- **la** **figure 6** représente la rampe vue de derrière lorsque le premier tronçon est pivoté vers le haut.

La figure 1 représente un pulvérisateur agricole (1) conforme à la présente invention. Ledit pulvérisateur (1) est attelé à un véhicule tracteur (2) qui le tire suivant une direction et un sens d'avance indiqué par la flèche (3). Dans la suite de la description, les notions suivantes "avant" et "arrière", "devant" et "derrière" sont définies par rapport au sens d'avance (3) et les notions "droite" et "gauche" sont définies en regardant ledit pulvérisateur (1) de l'arrière dans le sens d'avance (3).

D'une manière connue en soi, ledit pulvérisateur (1) comporte un châssis (4) qui roule sur le sol au moyen de deux roues (5). Ledit châssis (4) supporte notamment une cuve (6) destinée à contenir un produit de traitement. Dans cet exemple de réalisation, ledit pulvérisateur (1) est donc de type traîné. Il va de soi que la présente invention concerne également des pulvérisateurs de type porté ainsi que des pulvérisateurs automoteurs. Ledit pulvérisateur (1) comporte également une rampe d'épandage (7). Lors du travail, ladite rampe (7) s'étend transversalement à ladite direction d'avance (3), de part et d'autre dudit pulvérisateur (1). Il est en sus prévu des moyens pour prélever le produit de traitement contenu dans ladite cuve (6) et de l'envoyer sous pression jusqu'à des buses de pulvérisation soutenues par ladite rampe (7). Ledit pulvérisateur agricole (1) peut ainsi épandre un produit de traitement sur le sol ou sur des plantes suivant une grande largeur de travail. D'une manière préférentielle, ladite rampe d'épandage (7) est liée audit châssis (4) au moyen d'un dispositif de liaison (8). Ledit dispositif de liaison (8) permet notamment de régler la hauteur de pulvérisation de ladite rampe (7) par rapport au sol.

D'une manière également connue, lesdites rampes (7) employées actuellement sont de plus en plus grandes, avec des dimensions pouvant atteindre plusieurs dizaines de mètres, pour notamment augmenter le rendement dudit pulvérisateur agricole (1). Afin que ledit pulvérisateur (1) puisse néanmoins respecter le gabarit pour le transport sur la voie publique, ladite rampe (7) se compose de plusieurs tronçons articulés. Ainsi à la lumière de la figure 1, ladite rampe (7) peut avantageusement être repliée plusieurs fois le long de ladite cuve (6) lors du transport. Ladite rampe (7) comporte en outre à ses extrémités des tronçons destinés à s'esquiver en cas de choc avec le sol ou un obstacle. On évite de la sorte tous endommagements de ladite rampe (7).

Ainsi à la lumière des figures 2 à 6, ladite rampe d'épandage (7) selon la présente invention comporte au moins un premier tronçon (9) et un deuxième tronçon (10). Une extrémité dudit premier tronçon (9) est liée de manière pivotante à une extrémité dudit deuxième tronçon (10) au moyen d'une articulation (11). En condition normale d'utilisation telle que représentée aux figures 2 et 3, ledit premier tronçon (9) et ledit deuxième tronçon (10) sont alignés et ils s'étendent dans le prolongement l'un de l'autre. Par contre lorsque ladite rampe (7) rencontre un obstacle et à la lumière des figures 4 à 6, ladite articulation (11) permet avantageusement un mouvement de pivotement entre ledit premier tronçon (9) et ledit deuxième tronçon (10). Les détails concernant ladite articulation (11) seront décrits plus loin.

Lors du travail, ledit pulvérisateur (1) peut être amené à se déplacer sur un sol chaotique avec une vitesse d'avancement relativement élevée. Ladite rampe (7) subit alors des secousses orientées notamment d'avant en arrière. Pour éviter que ces mouvements de fouet ne provoquent un pivotement non souhaité entre ledit premier tronçon (9) et ledit deuxième tronçon (10), ladite rampe (7) comporte encore un dispositif de sécurité (12). Ledit dispositif de sécurité (12) est destiné à maintenir l'alignement entre ledit premier tronçon (9) et ledit deuxième tronçon (10) lors de conditions normales de travail. Par contre, ledit dispositif de sécurité (12) doit permettre le pivotement entre ledit premier tronçon (9) et ledit deuxième tronçon (10) lorsque ladite rampe (7) rencontre un obstacle. Pour ce faire, ledit dispositif de sécurité (12) comporte à son tour un accumulateur d'énergie (13) lié d'une part audit premier tronçon (9) et d'autre part audit deuxième tronçon (10).

Selon une caractéristique importante de la présente invention, le point d'accrochage dudit accumulateur d'énergie (13) sur ledit premier tronçon (9) est mobile par rapport audit premier tronçon (9). D'une manière plus précise, le point d'accrochage dudit accumulateur d'énergie (13) sur ledit premier tronçon (9) occupe au moins deux positions différentes par rapport audit premier tronçon (9) lors du pivotement autour de ladite articulation (11)

Ainsi d'une manière particulièrement avantageuse, lorsque ledit premier tronçon (9) et ledit deuxième tronçon (10) sont alignés, ledit point d'accrochage dudit accumulateur d'énergie (13) occupe une première position par rapport audit premier tronçon (9). Cette première position dudit point d'accrochage est déterminée de manière à ce que ledit accumulateur d'énergie (13) exerce un certain couple de maintien sur ledit premier tronçon (9) par rapport à ladite articulation (11) dans le but de conserver l'alignement. Puis lorsque l'on atteint un certain angle de pivotement entre ledit premier tronçon (9) et ledit deuxième tronçon (10) suite à un obstacle, ledit point d'accrochage dudit accumulateur d'énergie (13) occupe une deuxième position par rapport audit premier tronçon (9). Cette deuxième position dudit point d'accrochage est avantageusement placé sur l'axe de pivotement entre ledit premier tronçon (9) et ledit deuxième tronçon (10). A partir de ce moment, l'effort exercé par ledit accumulateur d'énergie (13) sur ledit premier tronçon (9) devient constant. De plus, le couple exercé par ledit accumulateur d'énergie (13) sur ledit premier tronçon (9) par rapport audit axe de pivotement devient nul. On limite ainsi avantageusement les efforts exercés sur ladite articulation (11). En outre, l'angle de pivotement entre ledit premier tronçon (9) et ledit deuxième tronçon (10) peut alors augmenter pour atteindre son maximum sans être freiné par ledit accumulateur d'énergie (13).

Dans l'exemple de réalisation représenté sur les figures, ladite articulation (11) entre ledit premier tronçon (9) et ledit deuxième tronçon (10) est avantageusement réalisée au moyen d'une rotule (14) et d'une bielle (15). A la lumière de la figure 2 notamment, ladite rotule (14) relie la partie supérieure desdits tronçons (9, 10) alors que ladite bielle (15) relie quant à elle la partie inférieure desdits tronçons (9, 10). La figure 3 représente plus précisément ladite articulation (11) vue de dessus. On notera que pour des raisons de clarté, certains éléments constituant la structure en treillis dudit deuxième tronçon (10) n'ont pas été représentés sur cette figure. Vu de dessus, ladite rotule (14) est disposée sensiblement dans le plan vertical médian de ladite rampe (7). Pour sa part, ladite bielle (15) est disposée transversalement audit plan vertical médian. Ladite bielle (15) est liée audit premier tronçon (9) au moyen d'une première liaison (16) et audit deuxième tronçon (10) au moyen d'une deuxième liaison (17). Ladite première et ladite deuxième liaisons (16, 17) sont chacune disposées de part et d'autre dudit plan vertical médian. Ladite articulation (11) permet ainsi un mouvement de pivotement vers l'avant autour d'un axe passant par ladite rotule (14) et ladite première liaison (16). A la lumière des figures 4 et 5, ladite articulation (11) permet également un mouvement de pivotement vers l'arrière autour d'un axe passant par ladite rotule (14) et ladite deuxième liaison (17). D'une manière particulièrement avantageuse, ladite articulation (11) permet en sus un pivotement vers le haut autour d'un axe horizontal passant par ladite rotule (14). Un tel pivotement est visible à la figure 6.

Dans l'exemple de réalisation représenté sur les figures, le déplacement du point d'accrochage dudit accumulateur d'énergie (13) par rapport audit premier tronçon (9) est avantageusement réalisé au moyen d'un galet (18) roulant sur une came (19). On améliore ainsi le fonctionnement dudit dispositif de sécurité (12) en diminuant les frottements et l'usure. Ladite came (19) est liée audit premier tronçon (9) alors que ledit galet (18) est lié audit accumulateur d'énergie (13). D'une manière préférentielle, ladite came (19) est liée de manière pivotante audit premier tronçon (9) au moyen d'une articulation d'axe sensiblement horizontal et transversal audit plan vertical médian de ladite rampe (7). Ladite came (19) peut ainsi pivoter vers le bas et vers le haut par rapport audit premier tronçon (9). D'une manière également préférentielle, ledit galet (18) est monté pivotant entre les extrémités de deux pattes (20, 21). L'autre extrémité desdites pattes (20, 21) est liée audit accumulateur d'énergie (13) au moyen d'un câble (22). Ainsi ledit accumulateur d'énergie (13) est avantageusement écarté de la zone d'évolution de ladite came (19) et dudit galet (18). A la lumière notamment de la figure 3, ladite came (19) est pourvue d'un profil sensiblement symétrique composé de quatre pentes (23, 24, 25, 26). Les points d'inflexion entre deux pentes consécutives (23, 24, 25, 26) constituent chacun une position stable pour ledit galet (18).

Dans l'exemple de réalisation représenté sur les figures, ledit accumulateur d'énergie (13) est réalisé au moyen d'un ressort de traction (27). Une extrémité dudit ressort (27) est accrochée audit deuxième tronçon (10), l'autre extrémité dudit ressort (27) étant liée audit câble (22). Le point d'accrochage dudit ressort (27) sur ledit deuxième tronçon (10) est de préférence situé dans le plan vertical médian de ladite rampe (7). D'une manière avantageuse, l'extrémité dudit ressort (27) est liée audit deuxième tronçon (10) au moyen d'un système de réglage, comme par exemple un système vis-écrou. On peut ainsi aisément régler la force initiale appliquée par ledit ressort (27) sur ledit premier tronçon (9) lorsque ledit premier tronçon (9) et ledit deuxième tronçon (10) sont alignés.

Ladite rampe (7) selon la présente invention fonctionne de la manière suivante.

En condition normale d'utilisation telle que représentée sur les figures 2 et 3, ledit premier tronçon (9) et ledit deuxième tronçon (10) sont alignés. D'une manière préférentielle, ledit deuxième tronçon (10) s'appuie sur ladite bielle (15) dans le voisinage de ladite première liaison (16) au moyen d'un premier élément élastique (28). De même, ledit premier tronçon (9) s'appuie sur ladite bielle (15) dans le voisinage de ladite deuxième liaison (17) au moyen d'un deuxième élément élastique (29). D'une manière également préférentielle, il est en sus prévu un élément élastique, non représenté, entre ladite rotule (14) et ledit premier tronçon (9) et/ou entre ladite rotule (14) et ledit deuxième tronçon (10). Lesdits éléments élastiques (28, 29) permettent avantageusement d'atténuer la transmission de vibrations entre lesdits tronçons (9, 10).

En condition normale d'utilisation, ledit galet (18) occupe une première position par rapport audit premier tronçon (9). Dans cette première position, ledit galet (18) est avantageusement distant d'une part d'un axe passant par ladite rotule (14) et par ladite première liaison (16) et d'autre part d'un axe passant par ladite rotule (14) et par ladite deuxième liaison (17). Ledit accumulateur d'énergie (13) peut ainsi exercer un couple autour desdits axes de manière à maintenir l'alignement desdits tronçons (9, 10). D'une manière préférentielle, ladite première position est située dans le plan vertical médian de ladite rampe (7). A la lumière de la figure 2, ledit galet (18) est situé plus bas que ladite rotule (14) et plus haut que lesdites liaisons (16, 17). Ainsi ledit accumulateur d'énergie (13) exerce également un couple vers le bas autour de ladite rotule (14).

Lorsque ladite rampe (7) rencontre un obstacle, ledit premier tronçon (9) est pivoté par exemple vers l'arrière autour de l'axe passant par ladite rotule (14) et ladite première liaison (17). A la lumière de la figure 4, l'inclinaison de ladite pente (25) permet dans un premier temps audit galet (18) de conserver ladite première position par rapport audit premier tronçon (9). De ce fait, le pivotement dudit premier tronçon (9) provoque un allongement dudit ressort de traction (27) d'où une augmentation de la force de traction exercée par ce dernier. Cette force de traction et la distance séparant ledit galet (18) de l'axe passant par ladite rotule (14) et ladite deuxième liaison (17) engendrent un couple de rappel pour ramener ledit premier tronçon (9) dans l'alignement dudit deuxième tronçon (10).

Si l'angle de pivotement dudit premier tronçon (9) augmente encore, l'inclinaison de ladite pente (25) va finalement permettre le basculement dudit galet (18) vers la deuxième position par rapport audit premier tronçon (9). Dans cette deuxième position et à la lumière de la figure 5, ledit galet (18) est avantageusement situé sur l'axe de pivotement dudit premier tronçon (9). La force exercée par ledit ressort de traction (27) engendre cette fois un couple nul sur ledit premier tronçon (9). Ledit tronçon (9) est ainsi avantageusement soumis uniquement à son propre poids. Ledit galet (18) étant situé sur ledit axe de pivotement, ledit ressort de traction (27) cesse de s'allonger malgré un pivotement accru dudit premier tronçon (9). La force exercée par ledit ressort de traction (27) est donc désormais constante.

D'une manière avantageuse, ledit galet (18) bascule dans la deuxième position lorsque ledit premier tronçon (9) a atteint un angle de pivotement compris entre 10 et 50 degrés, de préférence 20 degrés.

Le fonctionnement de ladite rampe (7) est analogue lorsque ledit premier tronçon (9) pivote vers l'avant.

Le pulvérisateur agricole (1) et la rampe (7) qui viennent d'être décrits, ne sont qu'un exemple de réalisation et d'utilisation qui ne saurait en aucun cas limiter le domaine de protection défini par les revendications suivantes.

Selon un exemple de réalisation non représenté, ledit accumulateur d'énergie (12) est réalisé au moyen d'un vérin oléopneumatique.

## Revendications

1. Rampe de pulvérisation comportant un premier tronçon (9) lié de manière pivotante à un deuxième tronçon (10) au moyen d'une articulation (11), et un dispositif de sécurité (12) destiné à maintenir ledit premier tronçon (9) dans le prolongement du deuxième tronçon (10), et destiné à permettre audit premier tronçon (9) de pivoter par rapport audit deuxième tronçon (10) en cas de choc avec un obstacle, ledit dispositif de sécurité comporte à son tour un accumulateur d'énergie (13) lié d'une part audit premier tronçon (9) et d'autre part audit deuxième tronçon (10), le point d'accrochage dudit accumulateur d'énergie (13) sur ledit premier tronçon (9) occupe au moins deux positions différentes par rapport audit premier tronçon (9) lors du pivotement autour de ladite articulation (11), ***caractérisée* par le fait *que*** le déplacement du point d'accrochage dudit accumulateur d'énergie (13) par rapport audit premier tronçon (9) est réalisé au moyen d'un galet (18) roulant sur une came (19) et que dans une des positions, le couple exercé par ledit accumulateur d'énergie (13) sur ledit premier tronçon (9) par rapport audit axe de pivotement devient nul.

2. Rampe de pulvérisation selon la revendication 1, ***caractérisée par le fait que*** lorsque ledit premier tronçon (9) et ledit deuxième tronçon (10) sont alignés, ledit point d'accrochage dudit accumulateur d'énergie (13) occupe une première position par rapport audit premier tronçon (9), cette première position dudit point d'accrochage étant déterminée de manière à ce que ledit accumulateur d'énergie (13) exerce un certain couple de maintien sur ledit premier tronçon (9) par rapport à ladite articulation (11) dans le but de conserver l'alignement.

3. Rampe de pulvérisation selon la revendication 1 ou 2, ***caractérisée par le fait que*** lorsque l'on atteint un certain angle de pivotement entre ledit premier tronçon (9) et ledit deuxième tronçon (10) suite à un obstacle, ledit point d'accrochage dudit accumulateur d'énergie (13) occupe une deuxième position par rapport audit premier tronçon (9), cette deuxième position dudit point d'accrochage étant placé sur l'axe de pivotement entre ledit premier tronçon (9) et ledit deuxième tronçon (10).

4. Rampe de pulvérisation selon la revendication 3, ***caractérisée par le fait que*** ledit point d'accrochage dudit accumulateur d'énergie (13) bascule de ladite première position à ladite deuxième position lorsque le pivotement entre ledit premier tronçon (9) et ledit deuxième tronçon (10) a atteint un angle compris entre 10 et 50 degrés, de préférence 20 degrés.

5. Rampe de pulvérisation selon l'une quelconque des revendications 1 à 4, ***caractérisée par le fait que*** ladite articulation (11) reliant ledit premier tronçon (9) et ledit deuxième tronçon (10) est réalisée au moyen d'une rotule (14) et d'une bielle (15).

6. Rampe de pulvérisation selon l'une quelconque des revendications 1 à 5, ***caractérisée par le fait que*** ladite came (19) est liée de manière pivotante audit premier tronçon (9) au moyen d'une articulation d'axe sensiblement horizontal et transversal à un plan vertical médian de ladite rampe (7).

7. Rampe de pulvérisation selon l'une quelconque des revendications 1 à 6, ***caractérisée par le fait que*** ledit galet (18) est lié audit accumulateur d'énergie (13).

8. Rampe de pulvérisation selon l'une quelconque des revendications 1 à 7, ***caractérisée par le fait que*** ladite came (19) est pourvue d'un profil sensiblement symétrique composé de quatre pentes (23, 24, 25, 26), les points d'inflexion entre deux pentes consécutives (23, 24, 25, 26) constituant une première position et une deuxième position stables pour ledit galet (18).

9. Rampe de pulvérisation selon l'une quelconque des revendications 1 à 8, ***caractérisée par le fait que*** ledit accumulateur d'énergie (13) est réalisé au moyen d'un ressort de traction (27).

10. Rampe de pulvérisation selon la revendication 9, ***caractérisée par le fait que*** une extrémité dudit ressort (27) est liée audit deuxième tronçon (10) au moyen d'un système de réglage.

11. Pulvérisateur agricole comportant une rampe (7) selon l'une quelconque des revendications 1 à 10.

## Patentansprüche

1. Spritzgestänge mit einem ersten Abschnitt (9), der drehbar mittels eines Gelenks (11) mit einem zweiten Abschnitt (10) verbunden ist, und einer Sicherheitsvorrichtung (12), die dazu bestimmt ist, den ersten Abschnitt (9) in der Verlängerung des zweiten Abschnitts (10) zu halten, und dazu bestimmt ist es dem ersten Abschnitt (9) zu gestatten, bezüglich des zweiten Abschnitts (10) im Falle eines Zusammenstosses mit einem Hindernis zu schwenken, die Sicherheitsvorrichtung ihrerseits ist mit einem Kraftspeicher (13) versehen, der einerseits mit dem ersten Abschnitt (9) und andererseits mit dem zweiten Abschnitt (10) verbunden ist, der Anhängepunkt des Kraftspeichers (3) auf dem ersten Abschnitt (9) nimmt mindestens zwei verschiedene Stellungen bezüglich des ersten Abschnitts (9) während der Schwenkung um das Gelenk (11) ein, ***dadurch gekennzeichnet,* dass** die Verschiebung des Anhängepunkts des Kraftspeichers (13) bezüglich des ersten Abschnitts (9) mittels einer Rolle (18), die auf einem Nocken (19) rollt, gewährleistet ist und, dass in einer der Stellungen, das durch den Kraftspeicher (13) auf den ersten Abschnitt (9) bezüglich der Drehachse ausgeübte Drehmoment null wird.

2. Spritzgestänge nach Anspruch 1, ***dadurch gekennzeichnet,* dass** wenn der erste Abschnitt (9) und der zweite Abschnitt (10) in einer Reihe aufgestellt sind, der Anhängepunkt des Kraftspeichers (13) eine erste Stellung bezüglich des ersten Abschnitts (9) einnimmt, wobei diese erste Stellung des Anhängepunkts derart bestimmt ist, dass der Kraftspeicher (13) ein gewisses Haltungsmoment auf den ersten Abschnitt (9) bezüglich des Gelenks (11) ausübt, um die Reiheanordnung aufzubewahren.

3. Spritzgestänge nach Anspruch 1 oder 2, ***dadurch gekennzeichnet,* dass** wenn nach einem Hindernis, ein gewisser Schwenkwinkel zwischen dem ersten Abschnitt (9) und dem zweiten Abschnitt (10) erreicht wird, der Anhängepunkt des Kraftspeichers (13) eine zweite Stellung bezüglich des ersten Abschnitts (9) einnimmt, wobei diese zweite Stellung des Anhängepunkts sich auf der Drehachse zwischen dem ersten Abschnitt (9) und dem zweiten Abschnitt (10) befindet.

4. Spritzgestänge nach Anspruch 3, ***dadurch gekennzeichnet,* dass** der Anhängepunkt des Kraftspeichers (13) von der ersten Stellung in die zweite Stellung schwingt, wenn die Schwenkung zwischen dem ersten Abschnitt (9) und dem zweiten Abschnitt (10), ein Winkel der zwischen 10 und 50 Grad liegt, vorteilhafterweise 20 Grad, erreicht hat.

5. Spritzgestänge nach irgend einem der Ansprüche 1 bis 4, ***dadurch gekennzeichnet,* dass** das den ersten Abschnitt (9) mit dem zweiten Abschnitt (10) verbindende Gelenk (11) mittels eines Kugelkopfes (14) und eines Zwischenglieds (15) gewährleistet ist.

6. Spritzgestänge nach irgend einem der Ansprüche 1 bis 5, ***dadurch gekennzeichnet,* dass** der Nocken (19) mittel eines Gelenks mit einer im wesentlichen horizontal und quer zu einer mittleren Vertikalebene des Gestänge (7) verlaufende Achse, mit dem ersten Abschnitt (9) schwenkbar verbunden ist.

7. Spritzgestänge nach irgend einem der Ansprüche 1 bis 6, ***dadurch gekennzeichnet,* dass** die Rolle (18) mit dem Kraftspeicher (13) verbunden ist.

8. Spritzgestänge nach irgend einem der Ansprüche 1 bis 7, ***dadurch gekennzeichnet,* dass** der Nocken (19) mit einem im wesentlichen symmetrischen, aus vier Schrägen (23, 24, 25, 26) gebildeten Profil, versehen ist, wobei die Knickpunkte zwischen zwei aufeinenanderfolgenden Schrägen (23, 24, 25, 26) eine erste und eine zweite stabile Stellung für die Rolle (18) bilden.

9. Spritzgestänge nach irgend einem der Ansprüche 1 bis 8, ***dadurch gekennzeichnet,* dass** der Kraftspeicher (13) mittels einer Zugfeder (27) gewährleistet ist.

10. Spritzgestänge nach Anspruch 9, ***dadurch gekennzeichnet,* dass** ein Ende der Zugfeder (27) mittels einer Einstellvorrichtung mit dem zweiten Abschnitt (10) verbunden ist.

11. Feldspritze mit einem Gestänge (7) nach irgend einem der Ansprüche 1 bis 10.

## Claims

1. Spray boom comprising a first section (9) connected in a pivotable manner to a second section (10) by means of an articulation (11), and a safety device (12) intended to keep the said first section (9) in the extension of the second section (10), and intended to allow the said first section (9) to rotate relative to the said second section (10) in case of collision with an obstacle, the said safety device for its part comprises a power accumulator (13) connected on the one hand to the said first section (9) and on the other hand to the said second section (10), the hitchting point of the said power accumulator (13) on the said first section (9) takes up at least two different positions relative to the said first section (9) during rotation about the said articulation (11), ***characterized in* that** the displacement of the hitching point of the said power accumulator (13) relative to the said first section (9) is carried out by means of a roller (18) rolling on a cam (19) and that in one of the positions, the torque applied by the said power accumulator (13) on the said first section (9) relative to the said rotation axis becomes nil.

2. Spray boom according to claim 1, ***characterized in* that** when the said first section (9) and the said second section (10) are aligned, the said hitching point of the said power accumulator (13) takes up a first position relative to the said first section (9), this first position of the said hitching point being determined so that the said power accumulator (13) applies a certain maintaining torque on the said first section (9) relative to the said articulation (11) in order to keep the alignment.

3. Spray boom according to claim 1 or 2, ***characterized in* that** when a certain rotation angle between the said first section (9) and the said second section (10) is reached further to an obstacle, the said hitching point of the said power accumulator (13) takes up a second position relative to the said first section (9), this second position of the said hitching point being placed on the rotation axis between the said first section (9) and the said second section (10).

4. Spray boom according to claim 3, ***characterized in* that** the said hitching point of the said power accumulator (13) swings from the said first position in the said second position when the rotation between the said first section (9) and the said second section (10) has reached an angle comprised between 10 and 50 degrees, preferably 20 degrees.

5. Spray boom according to any one of claims 1 to 4, ***characterized in* that** the said articulation (11) connecting the said first section (9) and the said second section (10) is carried out by means of a ball joint (14) and a connecting rod (15).

6. Spray boom according to any one of claims 1 to 5, ***characterized in* that** the said cam (19) is connected in a pivotable manner to the said first section (9) by means of an articulation with an axis substantially horizontal and transversal to a median vertical plane of the said boom (7).

7. Spray boom according to any one of claims 1 to 6, ***characterized in* that** the said roller (18) is connected to the said power accumulator (13).

8. Spray boom according to any one of claims 1 to 7, ***characterized in* that** the said cam (19) is provided with a substantially symmetrical profile made up of four slopes (23, 24, 25, 26), the bending points between two consecutive slopes (23, 24, 25, 26) making up a steady first and second position for the said roller (18).

9. Spray boom according to any one of claims 1 to 8, ***characterized in* that** the said power accumulator (13) is made by means of a draw-spring (27).

10. Spray boom according to claim 9, ***characterized in* that** an end of the said spring (27) is connected to the said second section (10) by means of an adjustment device.

11. Sprayer comprising a boom (7) according to any one of claims 1 to 10.
